Europäisches Patentamt

European Patent Office

Office européen des brevets

(19)

(11) Numéro de publication: **0 005 495**
**B1**

(12) **FASCICULE DE BREVET EUROPEEN**

(45) Date de publication du fascicule du brevet: **15.09.82**

(51) Int. Cl.³: **H 02 G 1/08**

(21) Numéro de dépôt: **79101382.4**

(22) Date de dépôt: **07.05.79**

(54) **Dispositif pour attraper à distance une aiguille brisée de tirage d'un câble électrique dans une canalisation.**

(30) Priorité: **12.05.78 FR 7814214**

(43) Date de publication de la demande:
**28.11.79 Bulletin 79/24**

(45) Mention de la délivrance du brevet:
**15.09.82 Bulletin 82/37**

(84) Etats contractants désignés:
**BE CH DE FR GB IT NL SE**

(56) Documents cités:
**DE - A - 22 508 81**
**US - A - 17 200 37**
**US - A - 18 995 31**
**US - A - 21 422 90**
**US - A - 31 377 65**

(73) Titulaire: **LES CABLES DE LYON Société anonyme dite:**
**170, avenue Jean Jaurès**
**F-69353 Lyon Cedex 2 (FR)**

(72) Inventeur: **Johanis, Jean**
**12, rue André Bollier**
**F-69007 Lyon (FR)**
Inventeur: **Mattelon, Jean-Claude**
**10, rue Richan**
**F-69004 Lyon (FR)**

(74) Mandataire: **Weinmiller, Jürgen et al,**
**Zeppelinstrasse 63**
**D-8000 München 80 (DE)**

EP 0 005 495 B1

Courier Press, Leamington Spa, England.

Dispositif pour attraper à distance une aiguille brisée de tirage d'un câble électrique dans une canalisation

La présente invention concerne un dispositif pour attraper à distance une aiguille brisée de tirage d'un câble électrique dans une canalisation, comprenant un manchon dont une extrémité est fixée à un organe d'actionnement et l'autre extrémité présente un orifice d'une cavité, à l'intérieur de laquelle sont logés des moyens de serrage pour l'aiguille, moyens qui sont repoussés en direction de l'orifice à l'aide de moyens résilients, par leur extrémité opposée à celle du côté de l'orifice, le long d'une portée conique, de diamètre décroissant en direction de cet orifice.

On sait qu'en général les câbles ne sont pas assez rigides pour être poussés d'une fosse à une autre dans les canalisations enterrées, et qu'on les tire au moyen d'un ensemble d'aiguilles rigides, vissées les unes aux autres. On introduit préalablement les aiguilles dans une canalisation en les engageant les unes après les autres à partir d'une fosse. La longueur réduite de chaque aiguille permet de la descendre dans la fosse et de la visser sur la précédente, après quoi l'on pousse toute la série. On recommence avec l'aiguille suivante et ainsi de suite. On parvient ainsi à faire déboucher la première aiguille dans la fosse suivante. On accroche alors le câble à la dernière aiguille, et de la fosse suivante on peut le faire avancer en tirant sur la première aiguille. On démonte les aiguilles au fur et à mesure de leur entrée dans la deuxième fosse, jusqu'à apparition du câble, que l'on peut alors tirer.

Pour des raisons d'économie, les aiguilles sont souvent réalisées en matière plastique. Il peut se produire qu'en exerçant une traction sur la série d'aiguilles, l'une casse, et le câble est alors immobilisé. Il faut alors retirer le câble, et recommencer l'opération depuis le début.

La présente invention a en particulier pour objet un dispositif permettant de rattraper la partie d'aiguille brisée et de la faire venir dans la deuxième fosse sans avoir à faire reculer le câble. Jusqu'à maintenant, on ne connait aucun outil permettant la récupération facile d'aiguilles immobilisées à l'intérieur de la canalisation.

Il est décrit dans la demande de brevet DE—A 2.250.881 un dispositif destiné à être fixé manuellement sur l'extrémité d'un câble de manière à tirer celui-ci, comportant un manchon dont une extrémité est fixée à un organe d'actionnement et dont l'autre extrémité présente un orifice d'une cavité, à l'intérieur de laquelle est logé un mandrin à plusieurs mors, destiné à assurer le serrage du câble, et repoussé en direction de l'orifice le long d'une portée conique de diamètre décroissant en direction de ce dernier, par un ressort s'appuyant à l'arrière sur le fond de la cavité et à l'avant sur un plateau fermant la cavité derrière le mandrin. Les mors définissent en position avancée vers l'orifice un diamètre inférieur au diamètre de câble.

Il est décrit dans le brevet US—A 2 142 290 un dispositif destiné à accrocher l'une à l'autre deux séries d'aiguilles pouvant servir à tirer des câbles dans des canalisations, comprenant une pièce mâle et une pièce femelle. La pièce femelle, de diamètre notablement inférieur à celui de la canalisation comporte à l'avant d'une cavité des ressorts plats convergeant intérieurement vers une zone axiale. La pièce mâle comporte une extrémité avant en forme d'ogive de dimension telle qu'elle puisse pénétrer dans la cavité en repoussant les ressorts et s'enclencher sur la pièce femelle. Elle possède plus en arrière une partie sphérique assurant son guidage préliminaire dans la canalisation jusqu'à l'arrivée au contact de la pièce femelle.

Le problème de l'accrochage d'une aiguille brisée dans une canalisation est beaucoup plus difficile que celui du tirage d'une tête de câble, car l'aiguille brisée est disposée souvent dans la canalisation latéralement et obliquement par rapport à l'axe de cette dernière, et la surface de son extrémité brisée est souvent en biseau. Même en munissant l'extrémité avant du manchon de la demande de brevet DE—A 2.250.881 d'une embouchure évasée, on risque que l'extrémité de l'aiguille ne se présente pas entre les mors du manchon, ou bien qu'elle s'y engage obliquement, de sorte que ceux-ci n'auront pas une prise suffisamment solide pour éviter un décrochage de l'aiguille lorsque l'on tirera en arrière le manchon pour retirer l'aiguille de la canalisation.

La présente invention a donc pour but de procurer un dispositif pour attraper à distance une aiguille brisée de tirage d'un câble électrique dans une canalisation qui permette une préhension certaine de l'aiguille brisée et accroche celle-ci suivant l'axe des moyens de serrage et à une certaine distance de la surface d'extrémité brisée, de façon à éviter les risques de décrochage de l'aiguille lors de la traction qui est exercée ensuite sur elle.

Le dispositif selon l'invention est caractérisé en ce que le manchon comporte un orifice de formé évasée vers l'extérieur, dont l'extrémité avant est prévue pour remplir pratiquement en totalité toute la section intérieure de la canalisation, suivi d'un étranglement cylindrique de diamètre légèrement supérieur à celui de l'aiguille, en ce que les moyens de serrage définissent en position avancée vers l'orifice un diamètre interne inférieur à celui de l'aiguille, et en ce que les moyens résilients laissent libre une zone axiale permettant à l'aiguille de pénétrer jusqu'au fond de la cavité du manchon.

La description qui va suivre, en regard du dessin annexé, donnée à titre d'exemple, fera bien comprendre comment l'invention peut être réalisée.

Sur les dessins:

La figure 1 est une vue en coupe axiale d'une canalisation et d'un dispositif selon l'invention, placé dans celle-ci, peu avant de recontrer une aiguille brisée, et

La figure 2 est une vue en coupe analogue à celle de la figure 1, après que l'aiguille brisée ait été engagée dans la dispositif selon l'invention et y soit maintenue.

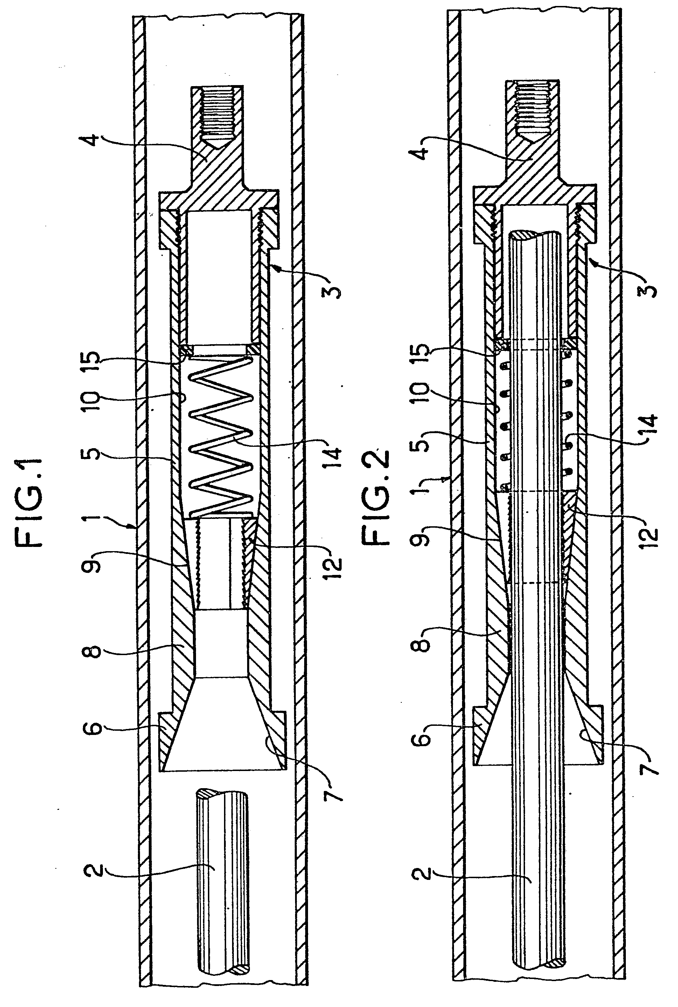

On a représenté en 1 sur la figure 1 une canalisation, qui est généralement d'un type qui est enterré entre deux fosses. Une aiguille brisée 2 est en général raccordée par son autre bout à l'extrémité d'un câble (non représenté) qui doit être tiré vers la droite. Il faut alors aller attraper par la droite l'aiguille 2 et la tirer vers la droite, si l'on ne veut pas ressortir le câble engagé en désaiguilletant la canalisation, pour tout recommencer. L'appareil selon l'invention, indiqué en 3, est lui-même introduit par l'extrémité droite de la canalisation au moyen d'aiguilles du même type de préférence, vissées dans son extrémité arrière 4, de la même façon que les aiguilles sont vissées les unes dans les autres.

L'appareil comprend essentiellement un manchon 5, terminé à son extrémité avant par une partie 6 de plus grand diamètre, prévue pour remplir pratiquement en totalité toute la section intérieure de la canalisation. La cavité intérieure du manchon est ouverte vers l'avant par un orifice en entonnoir 7, et après un étranglement 8, elle se prolonge par une autre partie en entonnoir 9 qui se raccorde à une partie cylindrique 10.

A l'intérieur du manchon est disposé un mandrin 12 par exemple à trois mors. Bien qu'il soit possible de construire un dispositif avec deux mors ou même un seul qui pourrait être un coin, il semble préférable d'en prévoir trois. Plus ne parait pas apporter d'avantage. Le mandrin est poussé vers la surface conique 9 par un ressort 14 prenant appui sur une rondelle 15 convenablement assujettie dans le fond de manchon, qui peut être démonté facilement. Le diamètre intérieur du mandrin, dans la position avancée, est inférieur à celui de l'aiguille 2. Les faces intérieures des mors sont munies de reliefs appropriés, tels que des crans, pour mieux entraîner sans glissement l'aiguille à extraire. Les mors ont une forme extérieure conique correspondant à la surface 9.

Le dispositif fonctionne de la façon suivante.

L'appareil 3 est engagé par la droite dans la canalisation, au devant de l'aiguille brisée 2. La forme en entonnoir 7 permet de faire entrer l'aiguille dans l'ouverture antérieure du manchon quand on pousse l'appareil vers l'aiguille immobilisée. Lorsque l'appareil est poussé en avant, les mors, en butée sur l'aiguille, reculent jusqu'à ce que le trou central soit ouvert au diamètre suffisant. L'aiguille s'enfonce jusqu'au fond de l'appareil tandis que les mors poussés par le ressort, sont ramenés en avant. Ainsi, lorsque l'on retire l'appareil après être arrivé en butée sur l'aiguille immobilisée, les mors sont serrés de plus en plus étroitement sur l'aiguille, puisque la traction tend à les faire glisser vers la partie la plus étroite du corps de l'appareil. Le serrage est suffisamment efficace et l'on peut tirer l'aiguille brisée et tout ce qui est accroché derrière elle.

Le démontage s'effectue en dévissant la partie arrière de l'appareil. On retire le ressort et l'on pousse l'appareil sur l'aiguille. On peut ainsi écarter le mandrin et libérer l'aiguille. Le remontage s'effectue sans difficulté grâce à une rondelle de maintien des mors qui peut être utilisée facultativement dans ce but.

Il va de soi que le mode de réalisation décrit n'est qu'un exemple, et qu'il serait possible de le modifier, notamment par substitution d'équivalents techniques, sans sortir pour cela du cadre de l'invention.

**Revendications**

1. Dispositif pour attraper à distance une aiguille brisée (2) de tirage d'un câble électrique dans une canalisation, comprenant un manchon (5) dont une extrémité est fixée à un organe d'actionnement et l'autre extrémité présente un orifice (7) d'une cavité, à l'intérieur de laquelle sont logés des moyens de serrage (12) pour l'aiguille, moyens qui sont repoussés en direction de l'orifice à l'aide de moyens résilients (14), par leur extrémité opposée à celle de côté de l'orifice, le long d'une portée conique (9), de diamètre décroissant en direction de cet orifice, caractérisé en ce que ledit manchon (15) comporte un orifice (7) de forme évasée vers l'extérieur, dont l'extrémité avant est prévue pour remplir pratiquement en totalité toute la section intérieure de la canalisation, suivi d'un étranglement cylindrique (8) de diamètre légèrement supérieur à celui de l'aiguille, en ce que les moyens de serrage (12) définissent en position avancée vers l'orifice un diamètre interne inférieur à celui de l'aiguille, et en ce que les moyens résilients (14) laissent libre une zone axiale permettant à l'aiguille de pénétrer jusqu'au fond de la cavité du manchon.

2. Dispositif selon la revendication 1, caractérisé en ce que lesdits moyens résilients sont constitués par un ressort unique (14) de diamètre externe voisin du diamètre interne de ladite cavité.

3. Dispositif selon la revendication 1 ou 2, caractérisé en ce que les moyens de serrage (12) sont constitués par un mandrin, comprenant plusieurs mors, dont la surface externe conique correspond à la section du manchon et dont la surface interne est munie de reliefs assurant une meilleure adhérence sur l'aiguille.

**Claims**

1. Device for the remote gripping of a broken needle (2) used for drawing an electric cable through a conduit, comprising a sleeve (5) one end of which is fixed to an operating element, whereas the other end presents an opening (7) of a cavity in which are placed locking means (12) for the needle, these locking means being pushed at their end opposed to that near the opening by resilient means (14) in the direction of the opening along a conical area (9) of decreasing diameter in direction of this opening, characterized in that said sleeve (15) comprises an opening (7) of outwardly splayed form, the front end of which is destined to fill almost totally the entire inner section of the conduit, followed by a cylindrical constriction (8) of a diameter slightly superior to that of the needle, in that the locking means (12) define in the position near the opening an interior diameter inferior to that of the needle, and in that the resilient means (14) provide an axial passage permitting the needle to penetrate to the bottom of the cavity of the sleeve.

2. Device according to claim 1, characterized in that said resilient means consist in a unique spring (14) of an outer diameter near the inner diameter of said cavity.

3. Device according to claim 1 or 2, characterized in that the locking means (12) are constituted by a mandrel comprising several chaps, the outer conical surface of which corresponds to the section of the sleeve, whereas its inner surface is provided with reliefs assuring a better adherence on the needle.

## Patentansprüche

1. Fernfang-Vorrichtung für eine gebrochene Nadel (2) zum Ziehen eines elektrischen Kabels in einem Kanal, mit einer Hülse (5), deren eines Ende an einem Betätigungsorgan befestigt ist und deren anderes Ende eine Öffnung (7) eines Hohlraums aufweist, in dessen Innerem sich Einspannmittel (12) für die Nadel befinden, wobei die Einspannmittel mithilfe elastischer Mittel (14) an ihrem der Öffnung entgegengesetzten Ende längs eines konischen Bereichs (9) mit einem sich in Richtung dieser Öffnung verringernden Durchmesser in Richtung der Öffnung zurückgestoßen werden, dadurch gekennzeichnet, daß die Hülse (15) eine Öffnung (7) mit sich nach außen erweiternder Form aufweist, deren vorderes Ende den inneren Querschnitt des Kanals praktisch total ausfüllt, gefolgt von einer Verengung (8) mit einem Durchmesser, der geringfügig größer ist als der der Nadel, daß die Einspannmittel (12) in der Nähe der Öffnung einen inneren Durchmesser aufweisen, der kleiner ist als der der Nadel, und daß die elastischen Mittel (14) einen axialen Bereich freilassen, der die Nadel bis zum Boden des Hohlraums der Hülse vordringen läßt.

2. Vorrichtung nach Anspruch 1, dadurch gekennzeichnet, daß die elastischen Mittel aus einer einzigen Feder (14) bestehen, deren äußerer Durchmesser fast dem inneren Durchmesser des Hohlraums gleicht.

3. Vorrichtung nach Anspruch 1 oder 2, dadurch gekennzeichnet, daß die Einspannmittel (12) aus einem Dorn bestehen, der mehrere Sektoren aufweist, dessen äußere konische Oberfläche dem Querschnitt der Hülse entspricht und dessen innere Oberfläche mit Vorsprüngen versehen ist, die ein besseres Haften auf der Nadel bewirken.

FIG.1

FIG.2

0005495